# EUROPÄISCHE PATENTANMELDUNG

(11) **EP 0 732 574 A2**
(43) Veröffentlichungstag der Anmeldung: **18.09.1996**
(21) Anmeldenummer: 95120344.7
(22) Anmeldetag: 21.12.1995
(51) Int. Cl.: G01M 1/32

(54) **Vorrichtung zum selbständigen Ausgleich einer Umwucht bei einem rotierenden Körper**

(30) Priorität: 14.03.1995 DE 19508792
(71) Anmelder: Heraeus Instruments GmbH, 63450 Hanau (DE)
(72) Erfinder: Koch, Michael, D-37520 Osterode (DE)
(74) Vertreter: Kühn, Hans-Christian

(57) **Zusammenfassung**

Um ausgehend von einer bekannten Vorrichtung zum selbständigen Ausgleich einer Unwucht bei einem um eine Rotationsachse (19) rotierbaren Rotor (2), an dem oder in dem mindestens drei Auswuchtkammern (13) in Umfangsrichtung gleichmäßig verteilt sind, die jeweils über eine Eintrittsöffnung (14) mit einer Zufuhreinrichtung (8; 32) für ein Fluid (9; 22; 34) mit einem spezifischen Gewicht, das größer ist als dasjenige von Luft verbunden sind, und mit einer Regeleinrichtung (17; 23; 31) zur geregelten Zugabe von Fluid (9; 22; 34) von der Zufuhreinrichtung (8; 32) in die Auswuchtkammern (13), eine mechanisch einfache und betriebssichere Auswuchtvorrichtung anzugeben, wird erfindungsgemäß vorgeschlagen, daß die Zufuhreinrichtung (8; 32) einen ortsfest im oder am Rotor (2) angeordneten, das Fluid (9; 22; 34) aufnehmenden Hohlraum (8; 32) umfaßt, der in die Auswuchtkammern (13) mündende Austrittsöffnungen (11; 21; 29) aufweist, die von einem bewegbaren Schließkörper (17; 23; 31) in Abhängigkeit von einer auftretenden Unwucht zu schließen und zu öffnen sind.

## Beschreibung

Die Erfindung betrifft eine Vorrichtung zum selbständigen Ausgleich einer Unwucht bei einem um eine Rotationsachse rotierbaren Rotor, an dem oder in dem mindestens drei Auswuchtkammern in Umfangsrichtung gleichmäßig verteilt sind, die jeweils über eine Eintrittsöffnung mit einer Zufuhreinrichtung für ein Fluid mit einem spezifischen Gewicht, das größer ist als dasjenige von Luft verbunden sind, und mit einer Regeleinrichtung zur geregelten Zugabe von Fluid von der Zufuhreinrichtung in die Auswuchtkammern.

Bei Maschinen mit rotierenden Teilen, wie beispielsweise Zentrifugen, Waschmaschinen oder bei Schleifscheiben können Unwuchten der Antriebswelle oder des Rotors auftreten. Übersteigen die Unwuchten ein tolerierbares Maß, können die damit einhergehenden hohen Fliehkräfte zur Zerstörung der Vorrichtung führen und Personen gefährden. Aus Sicherheitsgründen ist es daher erforderlich, Unwuchten rechtzeitig zu erkennen und möglichst zu beseitigen.

Eine gattungsgemäße Vorrichtung ist aus der DE-A1 23 57 629 bekannt. Darin ist eine Auswuchtvorrichtung für den automatischen Unwuchtausgleich bei einem Schleifscheiben-Rotor beschrieben. Hierzu ist der Rotor an seinem Außenumfang mit einem Ringbehälter versehen, der in mehrere, voneinander getrennte, über den Umfang gleichmäßig verteilte Auswuchtkammern unterteilt ist. Die Auswuchtkammern sind mit nach außen hin offenen Schlitzen versehen, die einen Teilkreis um die Rotationsachse beschreiben und die in bezug auf die Rotationsachse unterschiedliche Radien haben. Den Schlitzen sind jeweils außerhalb des Rotors ortsfest angeordnete Düsen zugeordnet, über die eine Flüssigkeit direkt in die Kammern einspritzbar ist. Die Regelung der Flüssigkeitszufuhr erfolgt in einem Verteilerblock, der mit einer der Anzahl der Auswuchtkammern entsprechenden Anzahl von regelbaren Ventilen ausgestattet ist, über die den einzelnen Düsen in Abhängigkeit von auftgretenden Unwuchten Flüssigkeit gesteuert zugeführt wird. Für die Regelung ist es bei der bekannten Vorrichtung erforderlich, die Phase der Unwucht oder zumindest deren Größe zu ermitteln und in Abhängigkeit von der ermittelten Meßgröße die Ventile für die Flüssigkeit anzusteuern. Die Düsen müssen auf die Schlitze der Auswuchtkammern exakt justiert sein. Dabei ist zu beachten, daß rotierende Bauteile, nämlich der Rotor, entlang feststehender Bauteile, nämlich den Düsen, bewegt werden. Die Justierung ist daher sehr aufwendig und die Auswuchtvorrichtung im Betrieb störanfällig.

Der Erfindung liegt die Aufgabe zugrunde, eine mechanisch einfache und betriebssichere Auswuchtvorrichtung anzugeben.

Diese Aufgabe wird ausgehend von der eingangs genannten Vorrichtung erfindungsgemäß dadurch gelöst, daß die Zufuhreinrichtung einen ortsfest im oder am Rotationskörper angeordneten, das Fluid aufnehmenden Hohlraum umfaßt, der in die Auswuchtkammern mündende Austrittsöffnungen aufweist, die von einem bewegbaren Schließkörper in Abhängigkeit von einer auftretenden Unwucht zu schließen und zu öffnen sind.

Das Fluid wird bei der erfindungsgemäßen Vorrichtung in einem Hohlraum bereitgestellt, der ortsfest im oder am Rotationskörper angeordnet ist. Eine Zufuhr eines Fluids von außerhalb des Rotors und damit ein Justieren von Düsen zur Einleitung des Fluids ist bei der erfindungsgemäßen Vorrichtung nicht erforderlich.

Das Fluid ist üblicherweise eine Flüssigkeit, etwa ein Öl oder eine Kühlflüssigkeit. Da es nicht von außerhalb zugeführt werden muß, kann seine Fließgeschwindigkeit auch relativ gering sein; als Fluid kommt daher auch eine zähflüssige Masse, beispielsweise ein Gel oder ein rieselfähiges, feinteiliges Pulver in Frage. Zur Vermeidung von Unwuchten ist es erforderlich, daß das Fluid im Hohlraum gleichmäßig verteilt und daß der Hohlraum so gestaltet ist, daß er bei der Rotation keine Unwuchten erzeugt.

Das Fluid kann von dem Hohlraum entweder unmittelbar oder über eine den Hohlraum und die entsprechende Auswuchtkammer verbindende Leitung in die Auswuchtkammern gelangen. Damit das Fluid zum Ausgleich einer Unwucht beiträgt, ist es erforderlich, daß die Regeleinrichtung die Zufuhr von Fluid in die Auswuchtkammern so regelt, daß das Fluid überwiegend in eine der Unwucht in etwa gegenüberliegende Auswuchtkammer einströmt.

Das Öffnen und Schließen der Austrittsöffnungen wird durch einen bewegbaren Schließkörper bewirkt. Die Regelung der Schließkörper-Bewegung kann auf der durch die Unwucht zusätzlich erzeugten Fliehkraft beruhen. In dem Fall ist es erforderlich, daß das spezifische Gewicht des Schließkörpers größer ist als dasjenige des Fluids. Die Austrittsöffnungen sind über die Außenabmesssungen des Hohlraumes gleichmäßig verteilt. Es kann jeder Austrittsöffnung eine Auswuchtkammer zugeordnet sein.

Besonders einfach auszubilden ist ein Hohlram, der in bezug auf die Rotationsachse rotationssymmetrisch ausgebildet ist. Der Hohlraum kann beispielsweise innerhalb des Rotors ringförmig um die Rotationsachse verlaufen.

Besonders bewährt hat sich eine Vorrichtung, bei der der Schließkörer innerhalb des Hohlraumes angeordnet ist. Besonders geeignet ist eine Ausführungsform der Vorrichtung, bei der Schließkörper senkrecht zur Rotationsachse verschiebbar ausgebildet ist. Beim Auftreten einer Unwucht wirkt die dadurch zusätzlich erzeugte Fliehkraft in Richtung dieser Unwucht; im Normalfall also in etwa senkrecht zur Rotationsachse. Mittels eines in dieser Richtung verschiebbar ausgebildeten Schließkörpers sind die Austrittsöffnungen des Hohlraumes somit leicht verschließbar oder zu öffnen. Besonders bewährt hat sich ein Schließkörper, der ringförmig ausgebildet ist. Bei einem derartigen Schließkörper kann es sich um einen Metallring handeln. Im Falle einer Unwucht wirkt beispielsweise auf den Metallring eine zusätzliche Fliehkraft, die ihn in Richtung der Unwucht drückt. Dadurch wird die Unwucht der Vorrichtung zunächst verstärkt. Es ist daher darauf zu achten, daß die Bewegungsmöglichkeit des Schließkörpers in Richtung der Unwucht möglichst klein ist, damit die Verstärkung der Unwucht nur geringfügig ist. Vorteilhafterweise liegt die radiale Bewegungsmöglichkeit im Bereich zwischen 0,1 mm und 3 mm. Durch die Bewegung in Richtung der Unwucht öffnet der Schließkörper eine Austrittsöffnung auf der der Unwucht gegenüberliegenden Seite und verschließt eine Austrittsöffnung auf der der Unwucht zugewandten Seite des Hohlraumes.

Als besonders vorteilhaft hat sich eine Vorrichtung erwiesen, bei der die Eintrittsöffnungen in Richtung der Rotationsachse gesehen oberhalb des Hohlraumes angeordnet und mit einer Steigleitung mit den Austrittsöffnungen verbunden sind. Durch die bei der Rotation des Rotors wirkende Fliehkraft wird das Fluid über die Steigleitung in die jeweilige Auswuchtkammer gepreßt. Die Auswuchtkammern können so in Richtung der Rotationsachse gesehen oberhalb des Hohlraumes angeordnet sein. Von dort kann dann das Fluid gegebenenfalls in den Hohlraum zurückfließen.

Als besonders vorteilhaft hat sich eine Vorrichtung erwiesen, bei der Abstand der Austrittsöffnungen von der Rotationsachse kleiner ist als derjenige der Eintrittsöffnungen von der Rotationsachse. Diese Ausführungsform der Vorrichtung gewährleistet, daß das gesamte Fluid des Hohlraumes aufgrund der Fliehkraft über die Austrittsöffnungen in die jeweiligen Auswuchtkammern gelangen kann.

Besonders bewährt hat es sich, den Schließkörper ringförmig und mit einem Außendurchmesser auszubilden, der um einen Spalt kleiner ist als der Hohlraum-Innendurchmesser. Dadurch ist der Schließkörer innerhalb des Hohlraumes in allen Richtungen senkrecht zur Rotationsachse frei bewegbar. Seine Bewegungsmöglichkeit ist aber auf die Spaltweite begrenzt. Dadurch wird eine schon vorhandene Unwucht bei einer Bewegung des Schließkörpers in die Richtung der Unwucht nur unwesentlich verstärkt. Als besonders geeignet hat sich ein scheibenförmiger Schließkörper erwiesen, wobei der Hohlraum an seinem Außenumfang mit einer umlaufenden Nut zu versehen ist, in der die Austrittsöffnungen angeordnet sind, wobei die Höhe der Nut in Richtung der Rotationsachse gesehen, etwas größer ist als die Scheibendicke des Schließkörpers. Dabei kann der Rand des Schließkörpers in die Nut ragen, so daß er von der Nut geführt wird.

Dabei hat es sich besonders bewährt, die Tiefe der Nut kleiner als den Spalt und größer als die halbe Spaltweite auszubilden. Bei einer derartigen Ausführungsform der Vorrichtung ist gewährleistet, daß der Schließkörper weder im Ruhezustand oder im unwuchtfreien Rotationszustand, noch bei maximaler Auslenkung im Falle einer Unwucht sich vollständig aus der Nut herausbewegen kann. Er wird dadurch von der Nut stets geführt.

Dabei wird eine Ausführungsform der Vorrichtung bevorzugt, bei der der Schließkörper in Form eines Kreisringes ausgebildet und auf seiner Ober- oder Unterseite mit Rillen versehen ist, die von der Innenseite des Kreisringes zur Außenseite führen, und daß die Höhe der Nut um weniger als 1 mm größer ist als die Scheibendicke des Kreisringes. Bei dieser Ausführungsform gelangt das Fluid über die Rillen vom Hohlraum nach außen. Die Rillen können beispielsweise radial auf der Oberseite des Kreisringes verlaufen. Durch die Breite und Tiefe der Rillen läßt sich die Menge der Flüssigkeit regulieren, die im Fall einer Unwucht pro Zeiteinheit den Hohlraum verlassen kann. Um ein Verkanten zu vermeiden, wird der Kreisring vorteilhafterweise stets in der Nut geführt.

Als besonders vorteilhaft hat es sich erwiesen, daß die Auswuchtkammern einen in Richtung der Rotationsachse gesehen tiefsten Punkt aufweisen, in dessen Bereich ein Auslauf für das Fluid vorgesehen ist, der in den Hohlraum mündet. Bei dieser Ausführungsform kann das Fluid nach Beendigung der Rotation wieder in den Hohlraum zurückfließen.

Als besonders günstig hat es sich erwiesen, die Vorrichtung federnd und/oder gedämpft zu lagern. Dadurch neigt sich die Drehachse aufgrund der Fliehkraft in Richtung der Unwucht. Im Falle einer Unwucht wird die Rotationsachse ausgelenkt und wandert auf einer Kegel-Mantelfläche um die eigentliche Rotationsachse herum. Dadurch wird eine zusätzliche Fliehkraft in Richtung der Unwucht erzeugt, die dann dazu beiträgt, daß sich der Schließkörper in Richtung der Unwucht bewegt.

Ausführungsformen der Erfindung sind in der Zeichnung dargestellt und werden nachfolgend näher erläutert. In der Zeichnung zeigen in schematischer Darstellung im einzelnen
- **Figur 1:**: eine Zentrifuge mit einer erfindungsgemäßen Vorrichtung zum selbständigen Ausgleich einer Unwucht im Ruhezustand,
- **Figur 2:**: eine vergrößerte Darstellung des in Figur 1 mit A markierten Bereich im Falle einer Unwucht,
- **Figur 3:**: eine vergrößerte Darstellung den in Figur 1 mit B markierten Bereich im Falle einer Unwucht,
- **Figur 4:**: eine vergrößerte Darstellung einer anderen Ausführungsform des in Figur 1 mit A markierten Bereiches im Falle einer Unwucht,
- **Figur 5:**: den in Figur 4 dargestellten Bereich im Falle einer entgegengesetzt wie in Figur 4 wirkenden Unwucht,
- **Figur 6:**: eine Zentrifuge mit einer weiteren Ausführungsform der erfindungsgemäßen Vorrichtung zum selbständigen Ausgleich einer Unwucht,
- **Figur 7:**: einen Ausschnit aus einer weiteren Ausführungsform der Vorrichtung und
- **Figur 8:**: eine Ausführungsform des Schließkörpers mit radial verlaufenden Rillen

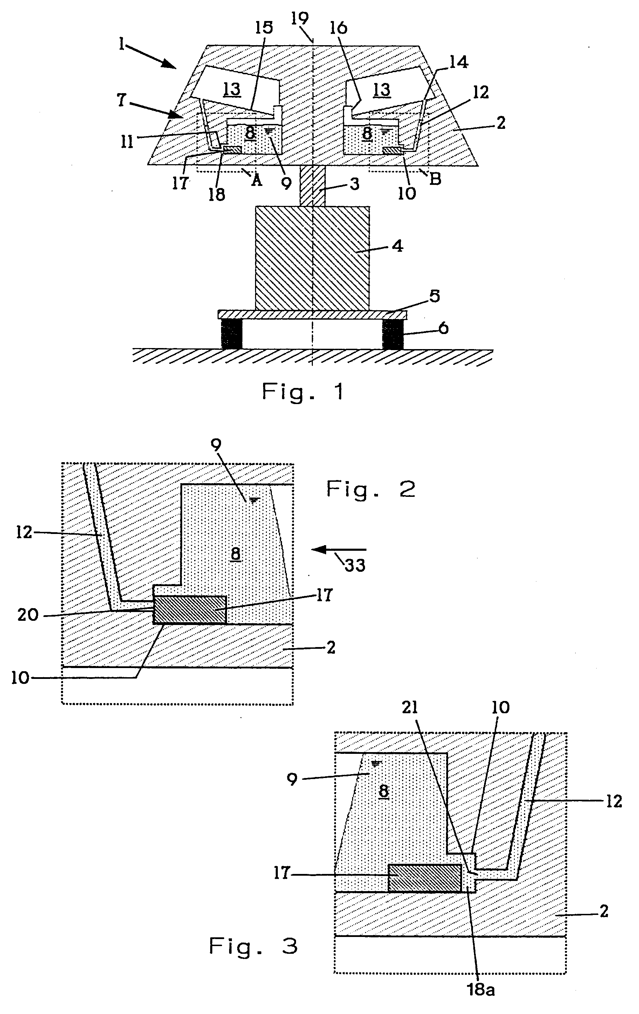

In der **Figur 1** ist die Bezugsziffer 1 der Zentrifuge insgesamt zugeordnet. Die Zentrifuge 1 weist einen Rotor 2 auf, der über eine Antriebswelle 3 von einem Motor 4 um die Rotationsachse 5 rotierbar ist. Der Motor 4 ist über eine Trägerplatte 5 auf Gummifüßen 6 gedämpft gelagert. Innerhalb des Rotors 2 ist eine Unwuchtausgleichsvorrichtung 7 vorgesehen. Die Unwuchtausgleichsvorrichtung 7 weist einen innerhalb des Rotors 2 umlaufenden, ringförmigen Hohlraum 8 auf, der mit Öl 9 gefüllt ist. Der Hohlraum 8 ist an seinem äußeren, unteren Rand mit einer Rechteck-Nut 10 versehen. In der in Figur 1 dargestellten Ausführungsform der erfindungsgemäßen Vorrichtung sind in der Rechteck-Nut 10 insgesamt vier Austrittsöffnungen 11 vorgesehen, die jeweils über einen Kanal 12 mit einer von insgesamt vier, in Umfangsrichtung des Rotors 2 und innerhalb des Rotors 2 gleichmäßig verteilten Auswuchtkammern 13 verbunden sind. Für die Verbindung mit dem Hohlraum 8 weisen die Auswuchtkammern 13 jeweils eine Eintrittsöffnung 14 auf, in die jeweils einer der Kanale 12 mündet. Die Eintrittsöffnungen 14 weisen zur Rotationsachse 5 einen größeren Abstand auf, als die Austrittsöffnungen 11, so daß der Kanal 12 in der gezeigten Ausführungsform von der Austrittsöffnung 11 schräg nach oben zur Eintrittsöffnung 14 verläuft. Die Auswuchtkammern 13 sind jeweils mit einem schräg nach unten verlaufenden Boden 15 ausgebildet, der in einen Auslauf 16 zum Hohlraum 8 mündet.

Innerhalb des Hohlraumes 8 befindet sich ein Metallring 17. Die Höhe des Metallringes 17 ist etwas niedriger als die Höhe der Rechteck-Nut 10, der Außendurchmesser des Metallringes 17 ist um einen Spalt kleiner als der Innendurchmesser der Rechteck-Nut 10. In Figur 1 ist die halbe Spaltweite mit der Bezugsziffer 18 bezeichnet.

Nachfolgend wird die Arbeitsweise der erfindungsgemäßen Vorrichtung anhand der Figur 1 und den vergrößerten Darstellungen der **Figuren 2 und 3** beispielhaft näher erläutert. Beim Stillstand des Rotors 2 befindet sich das Öl 9 ausschließlich im Hohlraum 8. Wenn sich der Rotor 2 schnell genug dreht, wird das Öl 9 durch die Fliehkraft nach außen gedrückt und verteilt sich dann im Hohlraum 8 in etwa so, wie es in den Figuren 2 und 3 dargestellt ist. Die auf den beweglichen Metallring 17 wirkenden Fliehkräfte heben sich im Falle fehlender Unwucht auf. Der Metallring 17 bewegt sich dann nicht, so daß alle Austrittsöffnungen 18 geöffnet bleiben und sich das Öl 9 in die Unwuchtkammer 13 gleichmäßig verteilt. Tritt hingegen von Anfang an eine Unwucht auf, neigt sich die Rotationsachse 19 aufgrund der dadurch erzeugten zusätzlichen Fliehkraft in Richtung 33 der Unwucht und beschreibt dabei einen Kegel um die ursprüngliche Rotationsachse 19. Dadurch wirkt nun auch auf den Metallring 17 eine Fliehkraft, die ihn in Richtung 33 der Unwucht drückt, wie dies in Figur 2 dargestellt ist. Die Austrittsöffnung 20 auf der Seite der Unwucht wird dadurch verschlossen. Durch die geschlossene Austrittsöffnung 20 und den Kanal 12 kann kein weiteres Öl 9 in die Auswuchtkammer 13 auf der Seite der Unwucht gelangen.

Die Situation auf der der Unwucht gegenüberliegenden Seite der Rotationsachse 19 ist in Figur 3 dargestellt. Aufgrund der Bewegung des Metallringes 17 in Richtung 33 (Figur 2) der Unwucht bleibt die Austrittsöffnung 21 offen oder sie wird geöffnet. Dadurch kann weiterhin Öl 9 über den Kanal 12 in diejenigen Auswuchtkammern 13 gelangen, die der Unwucht gegenüberliegen. Da dadurch Öl 9 bevorzugt in die der Unwucht gegenüberliegenden Auswuchtkammern 13 gelangt, wird die Unwucht allmählich ausgeglichen. Sobald die Unwucht ausgeglichen ist, stellt sich der in Figur 1 dargestellte Zustand ein, so daß dann Öl 9 über alle Kanäle 12 gleichermaßen in die Auswuchtkammern 13 abfließt.

Nachdem die Zentrifugation beendet ist, fließt das Öl 9 aus den Auswuchtkammern 13 über die jeweiligen Ausläufe 16 wieder in den Hohlraum 8 zurück.

Bei der in den Figuren 1 bis 3 dargestellten Ausführungsform der erfindungsgemäßen Vorrichtung ist der Außendurchmesser des Metallringes 17 und der Innendurchmesser und die Tiefe der Rechteck-Nut 10 so aufeinander abgestimmt, daß der Metallring 17 auch im Falle einer Unwucht, das heißt, wenn er an einer Stelle an der Innenwandung der Nut 10 anliegt, auf der gegenüberliegenden Seite sich nicht ganz aus der Nut 10 herausbewegt. Das bedeutet, die Differenz zwischen dem Außendurchmesser des Metallringes 17 und dem Durchmesser des Hohlraumes 8 (als Spalt mit der Bezugsziffer 18 a gekennzeichnet) ist kleiner als die Tiefe der Nut 10. Die Nut 10 wirkt dadurch stets als Führung für den Metallring 17.

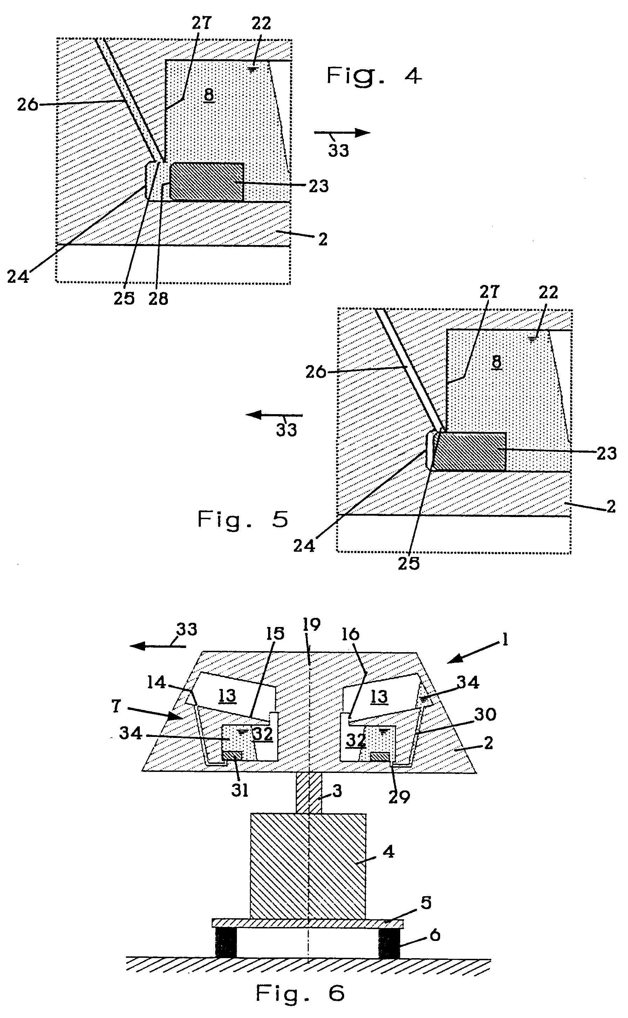

Von dieser Ausführungsform der erfindungsgemäßen Vorrichtung unterscheidet sich die in den **Figuren 4 und 5** dargestellte Ausführungsform im wesentlichen durch die Art der Regelung zur Zugabe von Flüssigkeit 22 von dem Hohlraum 8 in die Auswuchtkammern (hier nicht dargestellt). Auch bei dieser Ausführungsform ist ein Metallring 23 vorgesehen, der senkrecht zur Rotationsachse 19 innerhalb des Hohlraumes 8 beweglich ist. Die Dicke des Metallringes 23 stimmt mit der Höhe der Nut 24 in etwa überein. In der Oberseite der Nut 24 mündet die Öffnung 25 einer Steigleitung 26, die den Hohlraum 8 mit einer Auswuchtkammer 13 verbindet.

Der Außendurchmesser des Metallringes 23 ist kleiner als der Durchmesser der Nut 24, aber größer als der Innendurchmesser der Hohlraum-Wandung 27. Im Ruhezustand ragt der Metallring 23 daher in die umlaufende Nut 24 hinein und dichtet sie gegenüber dem übrigen Hohlraum 8 ab. Beim Auftreten einer Unwucht (Richtungspfeil 33) gleitet der Metallring 23 an der der Unwucht gegenüberliegenden Seite des Hohlraumes 8 aus der Nut 24 heraus und gibt dadurch die Öffnung 25 für die Flüssigkeit 22 frei. Diese strömt dann über die Steigleitung 26 in eine der Unwucht gegenüberliegende Auswuchtkammer 13 und gleicht dabei die Unwucht aus. Sobald die Unwucht ausgeglichen ist, gleitet der Metallring 23 aufgrund der dann wieder gleichmäßig an ihm angreifenden Fliehkräfte in seine ursprüngliche Position zurück und verschließt die Öffnung 25 wieder, wie dies in Figur 5 gezeigt ist. Um ein Verkanten des Metallringes 23 beim Hineingleiten in die Nut 24 zu vermeiden, sind seine Außenkanten 28 abgerundet. Diese Ausführungsform gewährleistet somit, daß nur dann Flüssigkeit 22 in die Auswuchtkammern 13 gelangt, wenn eine Unwucht auftritt. Sie ist daher besonders geeignet, für die Fälle, bei denen Unwuchten erst während des Betriebes der Vorrichtung auftreten.

Eine ähnliche Regelung liegt der Flüssigkeitszufuhr liegt auch der Ausführungsform gemäß **Figur 6** zugrunde. Soweit in Figur 6 verwendete Bezugsziffern nachfolgend nicht näher erläutert sind, betreffen sie gleiche oder ähnliche Bauteile wie die in der Figur 1 mit denselben Bezugsziffern dargestellten Vorrichtung. Die oben für diese Bauteile gegebenen Erläuterungen gelten für die Bauteile der Vorrichtung gemäß Figur 6 entsprechend.

Bei dieser Ausführungsform sind in der ringförmigen Kammer 32 eine der Anzahl der Auswuchtkammern 13 entsprechende Anzahl von Austrittsöffnungen 29 für eine Flüssigkeit 34 vorgesehen. Die Austrittsöffnungen 29 sind jeweils über eine Verbindungsleitung 30 mit einer Auswuchtkammer 13 verbunden. Sie verlaufen im Bereich der Außenwandung der Kammer 32 auf einem Kreisring um die Rotationsachse 19. Im Ruhezustand werden die Austrittsöffnungen 29 von einer ringförmigen Metallscheibe 31 überdeckt. Hierzu ist der Außendurchmesser der Metallscheibe 31 etwas größer, der Innendurchmesser etwas kleiner als der Durchmesser des Kreisringes, auf dem die Austrittsöffnungen 29 angeordnet sind. Um eine Bewegung in Richtung 33 der Unwucht zu gewährleisten, ist der Außendurchmesser der Metallscheibe 31 jedoch kleiner als der Außendurchmesser der ringförmigen Kammer 32.

In Figur 6 ist der Fall einer Unwucht dargestellt. Dabei bewegt sich die Metallscheibe 31 innerhalb der Kammer 32 in Richtung 33 der Unwucht. Dadurch überdeckt die Metallscheibe 31 weiterhin die Austrittsöffnung 29 auf der Seite der Unwucht und gibt gleichzeitig eine oder mehrere Austrittsöffnungen 29 auf der gegenüberliegenden Seite frei. Aufgrund der Fliehkraft gelangt dann über die freigegebene oder die freigegebenen Austrittsöffnungen 29 und über die entsprechenden Verbindungsleitungen 30 Flüssigkeit 34 in die Auswuchtkammer 13 oder in die Auswuchtkammern 13, auf der der Unwucht gegenüberliegenden Seite des Rotors 2 und gleicht dadurch die Unwucht aus.

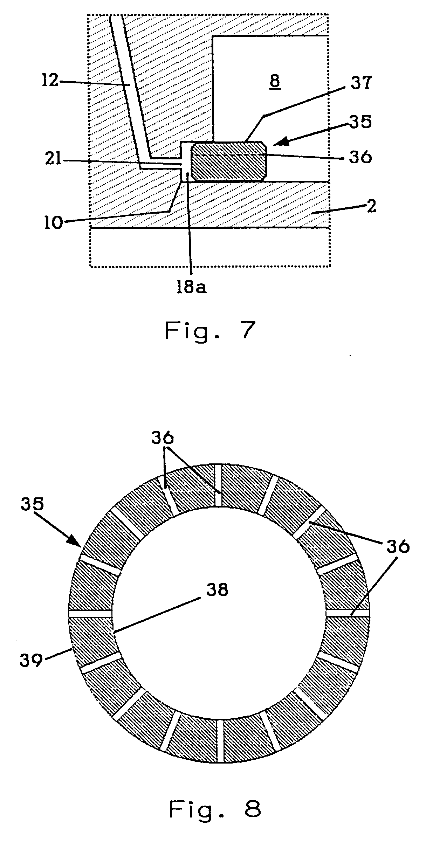

In **Figur 7** ist eine weitere Ausführungsform der erfindungsgemäßen Vorrichtung in einem Ausschnitt dargestellt. Die Ausführungsform unterscheidet sich von derjenigen gemäß Figur 1 nur durch den Schließkörper 35. Soweit in Figur 7 und 8 verwendete Bezugsziffern nachfolgend nicht näher erläutert sind, betreffen sie gleiche oder ähnliche Bauteile und Bestandteile wie die in der Figur 1 mit denselben Bezugsziffern dargestellten Vorrichtung.

Der Schließkörpers ist in Form eines Kreisringes 35 ausgebildet. Die Höhe des Kreisringes 35 ist um ca. 0,1 mm kleiner als die Höhe der am Außenumfang des Hohlraumes 8 verlaufenden Rechtecknut 10. Auf seiner Oberseite 37 mit Rillen 36 versehen, die von der Innenseite 38 des Kreisringes zur Außenseite 39 verlaufen. Der Außendurchmesser des Kreisringes 35 ist um 0,4 mm kleiner als der Außendurchmesser des Hohlaumes 8 im Bereich der Rechtecknut 10. Das bedeutet, daß sich der Kreisring 35 im Fall einer Unwucht um maximal 0,2 mm gegenüber seiner Position in Ruhestellung in Richtung der Unwucht verschieben kann. Außerdem ist die Tiefe der Rechtecknut 10 so bemessen, daß der Kreisring 10 die Rechtecknut 10 auch im Fall einer Unwucht an keiner Stelle verlassen kann; er wird also stets in der Rechtecknut 10 geführt und kann somit nicht verkanten.

In **Figur 8** ist der Kreisring 35 in einer Draufsicht dargestellt. Daraus ist ersichtlich, daß die Rillen 36 radial durchgehend von der Innenseite 38 zur Außenseite 39 führen. Tiefe und Breite der Rillen 36 sind so gewählt, daß das zum Gewichtsausgleich dienende Öl 9 vom Hohlraum 8 nur langsam in die Auswuchtkammern 13 abfließt.

## Patentansprüche

1. Vorrichtung zum selbständigen Ausgleich einer Unwucht bei einem um eine Rotationsachse (19) rotierbaren Rotor (2), an dem oder in dem mindestens drei Auswuchtkammern (13) in Umfangsrichtung gleichmäßig verteilt sind, die jeweils über eine Eintrittsöffnung (14) mit einer Zufuhreinrichtung (8; 32) für ein Fluid (9; 22; 34) mit einem spezifischen Gewicht, das größer ist als dasjenige von Luft verbunden sind, und mit einer Regeleinrichtung (17; 23; 31) zur geregelten Zugabe von Fluid (9; 22; 34) von der Zufuhreinrichtung (8; 32) in die Auswuchtkammern (13), dadurch gekennzeichnet, daß die Zufuhreinrichtung (8; 32) einen ortsfest im oder am Rotor (2) angeordneten, das Fluid (9; 22; 34) aufnehmenden Hohlraum (8; 32) umfaßt, der in die Auswuchtkammern (13) mündende Austrittsöffnungen (11; 21; 29) aufweist, die von einem bewegbaren Schließkörper (17; 23; 31) in Abhängigkeit von einer auftretenden Unwucht zu schließen und zu öffnen sind.

2. Vorrichtung nach Anspruch 1, dadurch gekennzeichnet, daß der Hohlraum (8; 32) zur Rotationsachse (19) rotationssymmetrisch ausgebildet ist.

3. Vorrichtung nach Anspruch 1 oder 2, dadurch gekennzeichnet, daß der Schließkörper (17; 23; 31) innerhalb des Hohlraums (8; 32) angeordnet ist.

4. Vorrichtung nach einem der vorhergehenden Ansprüche, dadurch gekennzeichnet, daß der Schließkörper (17; 23; 31) senkrecht zur Rotationsachse (19) verschiebbar ausgebildet ist.

5. Vorrichtung nach einem der vorhergehenden Ansprüche, dadurch gekennzeichnet, daß der Schließkörper (17; 23; 31) ringförmig ausgebildet ist.

6. Vorrichtung nach einem der vorhergehenden Ansprüche, dadurch gekennzeichnet, daß die Eintrittsöffnungen (14) in Richtung der Rotationsachse (19) gesehen oberhalb des Hohlraumes (8; 32) angeordnet und mit einer Steigleitung (12; 26; 30) mit den Austrittsöffnungen (11; 21; 29) verbunden sind.

7. Vorrichtung nach einem der vorhergehenden Ansprüche, dadurch gekennzeichnet, daß der Abstand der Austrittsöffnungen (11; 21; 29) von der Rotationsachse (19) kleiner ist als derjenige der Eintrittsöffnungen (14) von der Rotationsachse (19).

8. Vorrichtung nach einem der vorhergehenden Ansprüche, dadurch gekennzeichnet, daß der Schließkörper (17; 23; 31) ringförmig und mit einem Außendurchmesser ausgebildet ist, der um einen Spalt (18) kleiner ist als der Hohlraum (8;32)-Innendurchmesser.

9. Vorrichtung nach Anspruch 8, dadurch gekennzeichnet, daß der Schließkörper (17; 23; 31) scheibenförmig ausgebildet und der Hohlraum (8; 32) an seinem Außenumfang mit einer umlaufenden Nut (10; 24) versehen ist, in der die Austrittsöffnungen (11; 21; 29) angeordnet sind, wobei die Höhe der Nut (10; 24) in Richtung der Rotationsachse (19) gesehen, größer ist als die Scheibendicke des Schließkörpers (17; 23; 31).

10. Vorrichtung nach Anspruch 9, dadurch gekennzeichnet, daß die Tiefe der Nut (10; 24) kleiner als der Spalt (18a) und größer als die halbe Spaltweite (18) ist.

11. Vorrichtung nach einem der Ansprüche 8 bis 10, dadurch gekennzeichnet, daß der Schließkörper in Form eines Kreisringes (35) ausgebildet und auf seiner Ober- oder Unterseite mit Rillen (36) versehen ist, die von der Innenseite (37) des Kreisringes (35) zur Außenseite (38) führen, und daß die Höhe der Nut (10,24) um weniger als 1 mm größer ist als die Scheibendicke des Kreisringes (35).

12. Vorrichtung nach einem oder mehreren der vorhergehenden Ansprüche, dadurch gekennzeichnet, daß die Auswuchtkammern (13) einen in Richtung der Rotationsachse (19) gesehen tiefsten Punkt aufweisen, in dessen Bereich ein Auslauf (16) für das Fluid (9; 22; 34) vorgesehen ist, der in den Hohlraum (8; 32) mündet.

13. Vorrichtung nach einem oder mehreren der vorhergehenden Ansprüche, gekennzeichnet durch eine federnde und/oder gedämpfte Lagerung (6).
